(19) Europäisches Patentamt
European Patent Office
Office européen des brevets

(11) Veröffentlichungsnummer: **0 035 066**
**B1**

(12) # EUROPÄISCHE PATENTSCHRIFT

(45) Veröffentlichungstag der Patentschrift: **29.05.85**

(51) Int. Cl.⁴: **G 01 N 31/16**, G 01 N 33/18

(21) Anmeldenummer: **80108106.8**

(22) Anmeldetag: **22.12.80**

(54) **Titrationsmittel zur Bestimmung geringer Wassermengen und Verfahren zu seiner Anwendung.**

(30) Priorität: **05.03.80 DE 3008421**
**20.10.80 DE 3039511**

(43) Veröffentlichungstag der Anmeldung:
**09.09.81 Patentblatt 81/36**

(45) Bekanntmachung des Hinweises auf die Patenterteilung:
**29.05.85 Patentblatt 85/22**

(84) Benannte Vertragsstaaten:
**AT BE CH DE FR GB IT LI LU NL SE**

(56) Entgegenhaltungen:
**DE - C - 1 075 341**
**US - A - 3 656 907**
**JOURNAL OF THE ANERICAN CHEMICAL SOCIETY, Band 61, September 1939 Columbus D.M. SNITH et al. "Analytical Procedures Employing Karl Fischer Reagent. I. Nature of the Reagent" Seiten 2407 bis 2412**
**ANALYTICA CHEMICA ACTA, Band 94, 1977 Amsterdam J.C. VERHOEF et al. "Mechanism and Reaction Rate of the Karl Fischer Titration Reaction" Seiten 395 bis 403**
**FRESENIUS ZEITSCHRIFT FÜR ANALYTISCHE CHEMIE, Band 303, September 1980 Heidelberg E. SCHOLZ "Karl Fischer-Reagentien ohne Pyridin" Seiten 203 bis 207**
**Analytical Chemistry, vol. 28 (1956), S. 1166-1168**

(73) Patentinhaber: **RIEDEL-DE HAEN AKTIENGESELLSCHAFT, Wunstorfer Strasse 40, D-3016 Seelze 1 (DE)**

(72) Erfinder: **Scholz, Eugen, Dr., Am Sperrtor 40, D-3008 Garbsen (DE)**

(74) Vertreter: **Reuter, Johann-Heinrich, Dr. et al, HOECHST AKTIENGESELLSCHAFT Zentrale Patentabteilung Postfach 80 03 20, D-6230 Frankfurt/Main 80 (DE)**

**EP 0 035 066 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Titrationsmittel zur Bestimmung geringer Wassermengen, das ein Amin, Schwefeldioxid und Jod sowie ein Lösungsmittel enthält, und seine Verwendung zur Bestimmung des Wassergehaltes von Festsubstanzen oder Flüssigkeiten.

Die maßanalytische Bestimmung des Wassergehaltes von Flüssigkeiten und festen Körpern wurde bekanntlich von Karl Fischer entwickelt; sie beruht auf der Oxidation von Schwefeldioxid durch Jod in Gegenwart von Wasser nach der Gleichung

$$2\,H_2O + SO_2 + J_2 \rightleftharpoons H_2SO_4 + 2\,HJ\,,$$

und die Reaktion wird üblicherweise in wasserfreiem Methanol durchgeführt. Die Reagenz besteht aus einer Lösung von 790 g Pyridin, 192 g flüssigem Schwefeldioxid und 254 g Jod in 5 l wasserfreiem Methanol (vgl. Angew. Chemie, 48 [1935], 394). Da diese Lösung nicht lagerstabil ist, wird in der Praxis meist ein Zweikomponentenreagenz verwendet, das einerseits aus einer Lösung von Schwefeldioxid und Pyridin in Methanol und andererseits aus einer Lösung von Jod in Methanol besteht.

Ferner ist bereits bekannt, daß an Stelle von Pyridin zwar auch andere Stickstoffbasen verwendet wurden, aber keine Vorteile zeigten, z. B. Chinolin, Anilin, Dimethylanilin, Tri-n-butylamin und Triethanolamin. Die Stabilität einiger mit diesen Basen hergestellter Reagentien ist unzureichend; das Triethanolamin enthaltende Reagenz zersetzt sich bereits bei der Herstellung. Das Molverhältnis von Pyridin zu Schwefeldioxid ist mindestens 3 : 1, und im Falle des Tri-n-butylamins sind nahezu 4 Mol notwendig (vgl. J. Amer. Chem. Soc., 61 [1939], S. 2407—2412). Weitere Amine, die als Pyridin-Ersatz dienen sollten, sind Ethanolamin und Hexamethylentetramin; diese Amine sollen jedoch den Nachteil haben, daß sie keinen stabilen Titrationspunkt anzeigen oder störende Ausfällungen verursachen (vgl. Analytic. Chem., 28 [1956], S. 1166—1168). Dieses modifizierte KF-Reagenz diente zur Bestimmung von Wasser in Oxidationsmitteln, Reduktionsmitteln und Aminen.

Aufgabe der Erfindung ist nun die Bereitstellung eines Reagenzes, das zur Bestimmung geringer Wassermengen geeignet ist, an Stelle von Pyridin ein toxikologisch möglichst unbedenkliches Amin enthält und lagerstabil ist.

Die Erfindung betrifft ein Titrationsmittel zur Bestimmung geringer Wassermengen, enthaltend ein aliphatisches, gegebenenfalls 1, 2 oder 3 Sauerstoffatome enthaltendes Amin, Schwefeldioxid und Jod sowie einen wasserfreien, niedermolekularen Alkohol als Lösungsmittel, das dadurch gekennzeichnet ist, daß das Molverhältnis von Amin zu Schwefeldioxid 0,5 : 1 bis 1,3 : 1 beträgt.

Das erfindungsgemäße Titrationsmittel enthält als Aminbase ein aliphatisches (acyclisches) Amin. Das Amin kann 1, 2 oder 3 Sauerstoffatome aufweisen, vorzugsweise in Form von Hydroxylgruppen. Besonders geeignet ist ein acyclisches primäres Amin, das 2 bis 6 Kohlenstoffatome aufweist und gegebenenfalls 1, 2 oder 3 Hydroxylgruppen enthält. Geeignete Amine sind bespielsweise n-Propylamin, Isopropylamin, Diethylamin, Triethylamin, Dimethylaminopropylamin, Ethanolamin, Diethanolamin, Triethanolamin, Tris(hydroxymethyl)-aminoethan und Guanidin. Das Molverhältnis von Amin zu Schwefeldioxid liegt vorzugsweise im Bereich von 0,8 : 1 bis 1,2 : 1.

Als Lösungsmittel für die Reaktionskomponenten des erfindungsgemäßen Titrationsmittels wird ein wasserfreier niedermolekularer Alkohol, vorzugsweise Methanol oder Ethylenglykolmonomethylether, verwendet; er wird in einer Menge von 2 bis 50 Mol, vorzugsweise 5 bis 20 Mol, verwendet (bezogen auf 1 Mol Amin).

Das Schwefeldioxid kann auch im Gemisch mit einer Säure, vorzugsweise einer Carbonsäure, eingesetzt werden. Das Molverhältnis von Schwefeldioxid zu Säure beträgt dabei 20 : 1 bis 1 : 5 und vorzugsweise 2 : 1 bis 1 : 2. Als Säuren sind beispielsweise Ameisensäure, Oxalsäure und insbesondere Essigsäure geeignet.

Das erfindungsgemäße Titrationsmittel wird hergestellt durch Lösen des Amins, Schwefeldioxids und Jods in dem Alkohol, gegebenenfalls unter Kühlung auf eine Temperatur von 15 bis 50° C, vorzugsweise auf eine Temperatur von 20 bis 40° C. Dabei beträgt die Menge des Amins 0,1 bis 120 Mol, vorzugsweise 0,5 bis 5 Mol, die Menge des Schwefeldioxids 0,1 bis 10 Mol, vorzugsweise 0,5 bis 3 Mol, und die Menge des Jods 0,01 bis 3 Mol, vorzugsweise 0,1 bis 1 Mol (jeweils bezogen auf einen Liter Lösung). Die Herstellung der Lösung erfolgt in üblicher Weise unter Ausschluß von Luftfeuchtigkeit mit gereinigten Ausgangsmaterialien.

Das erfindungsgemäße Titrationsmittel eignet sich hervorragend zur Bestimmung geringer Wassermengen nach der Karl-Fischer-Methode. Die Erfindung betrifft demnach auch ein Verfahren zur quantitativen Ermittlung geringer Wassermengen mit Hilfe eines Reagenzes, das ein aliphatisches, gegebenenfalls 1, 2 oder 3 Sauerstoffatome enthaltendes Amin, Schwefeldioxid und Jod sowie einen wasserfreien, niedermolekularen Alkohol als Lösungsmittel enthält, das dadurch gekennzeichnet ist, daß als Reagenz ein erfindungsgemäßes Titrationsmittel verwendet wird.

Mit Hilfe des erfindungsgemäßen Titrationsmittels wird der Wassergehalt von festen oder flüssigen Substanzen ermittelt, z. B. von anorganischen Salzen, organischen Lösemitteln, Fetten, Ölen, Lebensmitteln und pharmazeutischen Präparaten.

Das erfindungsgemäße Titrationsmittel ist durch eine hohe Lagerstabilität ausgezeichnet. Es eignet sich als Zweikomponenten-Reagenz

und auch als Einkomponenten-Reagenz. Als Zweikomponenten-Reagenz besitzt es eine Lagerstabilität von mindestens zwölf Monaten. Als Einkomponenten-Reagenz ist es etwa drei Wochen stabil. Ein besonderer Vorteil des erfindungsgemäßen Titrationsmittels ist die Tatsache, daß es eine hohe Reaktionsgeschwindigkeit ermöglicht (vgl. Anwendungsbeispiel). Ferner zeichnet sich das Titrationsmittel dadurch aus, daß der Endpunkt der Titration beim Farbumschlag von farblos nach braun visuell gut erkennbar ist und deshalb eine aufwendige apparative Bestimmung unnötig ist.

Die folgenden Beispiele dienen zur Erläuterung der Erfindung.

Beispiel 1

a) In 500 ml Methanol werden unter Kühlung auf eine Temperatur von 50°C zunächst 56 g (0,87 Mol) Schwefeldioxid eingeleitet, und das Gemisch wird dann mit 61 g (0,50 Mol) Tris(hydroxymethyl)-aminoethan versetzt (Lösung A). Das Molverhältnis von Amin zu $SO_2$ beträgt 0,57 : 1.

b) 85 g (0,67 Mol) Jod werden in 1 l Methanol gelöst (Lösung B).

c) Die Lösungen A+B bilden ein Zweikomponenten-Reagenz. Lösung A wird der Probelösung zugesetzt, und mit Lösung B wird titriert.

Beispiel 2

a) Eine Lösung von 100 g (1,69 Mol) n-Propylamin in 600 ml Methanol wird mit 96 g (1,50 Mol) flüssigem Schwefeldioxid versetzt, wobei die Temperatur des Gemisches durch Kühlen auf 35 bis 40°C gehalten wird (Lösung A). Das Molverhältnis von Amin zu $SO_2$ beträgt 1,12 : 1.

b) Lösung B entspricht der Lösung B aus Beispiel 1.

Beispiel 3

a) 800 ml Methanol werden nacheinander mit 157 g (1,49 Mol) Diethanolamin, 60 g (1,0 Mol) Essigsäure und 49 g (0,77 Mol) flüssigem Schwefeldioxid versetzt, wobei die Temperatur des Gemisches durch Kühlen auf 30 bis 35°C gehalten wird (Lösung A). Das Molverhältnis von Amin zu ($SO_2$ + Essigsäure) beträgt 0,84 : 1.

b) Lösung B entspricht der Lösung B aus Beispiel 1.

Beispiel 4

Eine Lösung von 85 g (0,67 Mol) Jod in 1 l Methanol wird mit einer Lösung von 157 g (1,49 Mol) Diethanolamin, 60 g (1,0 Mol) Essigsäure und 49 g (0,77 Mol) flüssigem Schwefeldioxid in 800 ml Methanol vereinigt. Das Molverhältnis von Amin zu ($SO_2$ + Essigsäure) beträgt 0,84 : 1. Das erhaltene Einkomponenten-Reagenz ist 30 Tage lang verwendungsfähig.

Beispiel 5

820 ml Ethylenglykolmonomethylether werden nacheinander mit 157 g (1,49 Mol) Diethanolamin, 92 g (1,43 Mol) flüssigem Schwefeldioxid und 85 g (0,67 Mol) Jod versetzt, wobei die Temperatur des Gemisches durch Kühlen auf 30°C gehalten wird. Das Molverhältnis von Amin zu $SO_2$ beträgt 1,03 : 1. Das erhaltene Einkomponenten-Reagenz ist 1 Jahr lang verwendungsfähig.

Anwendungsbeispiel

a) 20 ml Methanol, das 40 mg Wasser enthält, wird mit dem nach Beispiel 2 erhaltenen Titrationsmittel unter Verwendung eines handelsüblichen Titrierautomaten titriert. Die Titration ist nach 140 s beendet.

b) Versuch a) wird wiederholt mit einem bekannten KF-Reagenz, das pro Liter Ethylenglykolmonomethylether 250 g (3,16 Mol) Pyridin, 90 g (1,40 Mol) Schwefeldioxid und 140 g (1,10 Mol) Jod enthält und ein Molverhältnis von Amin zu $SO_2$ von 2,24 : 1 aufweist. Die Titrierzeit beträgt 545 s.

c) Versuch a) wird wiederholt mit einem bekannten KF-Reagenz, das pro Liter Methanol 700 g (8,85 Mol) Pyridin, 81 g (1,27 Mol) Schwefeldioxid und 130 g (1,02 Mol) Jod enthält und ein Molverhältnis von Amin zu $SO_2$ von 7 : 1 aufweist. Die Titrierzeit beträgt 350 s.

**Patentansprüche**

1. Titrationsmittel zur Bestimmung geringer Wassermengen, enthaltend ein aliphatisches, gegebenenfalls 1, 2 oder 3 Sauerstoffatome enthaltendes Amin, Schwefeldioxid und Jod sowie einen wasserfreien, niedermolekularen Alkohol als Lösungsmittel, dadurch gekennzeichnet, daß das Molverhältnis von Amin zu Schwefeldioxid 0,5 : 1 bis 1,3 : 1 beträgt.

2. Titrationsmittel nach Anspruch 1, dadurch gekennzeichnet, daß das Amin ein 1, 2 oder 3 Hydroxylgruppen enthaltendes Amin ist.

3. Titrationsmittel nach Anspruch 1, dadurch gekennzeichnet, daß das Schwefeldioxid im Gemisch mit einer Säure vorliegt, wobei das Molverhältnis von Schwefeldioxid zu Säure 20 : 1 bis 1 : 5 beträgt.

4. Titrationsmittel nach Anspruch 3, dadurch gekennzeichnet, daß die Säure eine Carbonsäure ist.

5. Verfahren zur quantitativen Ermittlung geringer Wassermengen nach der Karl-Fischer-Methode mit Hilfe eines Reagenzes, das ein aliphatisches, gegebenenfalls 1, 2 oder 3 Sauerstoffatome enthaltendes Amin, Schwefeldioxid und Jod sowie einen wasserfreien, niedermolekularen Alkohol als Lösungsmittel enthält, dadurch gekennzeichnet, daß als Reagenz ein Titrationsmittel gemäß einem der vorhergehenden Ansprüche verwendet wird.

**Claims**

1. Titration agent for the determination of small amounts of water containing an aliphatic amine optionally containing 1, 2 or 3 oxygen atoms, sulfur dioxide and iodine as well as a water-free, low molecular alcohol as solvent, characterized in that the molar ratio of amine to sulfur dioxide is from 0.5 : 1 to 1.3 : 1.

2. Titration agent according to claim 1, characterized in that the amine is an amine containing 1, 2 or 3 hydroxy groups.

3. Titration agent according to claim 1, characterized in that the sulfur dioxide is present in admixture with an acid, the molar ratio of sulfur dioxide to acid being from 20 : 1 to 1 : 5.

4. Titration agent according to claim 3, characterized in that the acid is a carboxylic acid.

5. Process for the quantitative determination of small amounts of water according to the Karl Fischer method with the use of an agent containing an aliphatic amine optionally containing 1, 2 or 3 oxygen atoms, sulfur dioxide and iodine as well as a water-free, low molecular alcohol as solvent, characterized in that as agent there is used a titration agent according to one of the preceding claims.

**Revendications**

1. Réactif de titrage pour la détermination de faibles quantités d'eau, réactif qui renferme une amine aliphatique contenant eventuellement 1, 2 ou 3 atomes d'oxygène, de l'anhydride sulfureux et de l'iode ainsi qu'un alcool anhydre de bas poids moléculaire comme solvant et qui est caractérisé en ce que le rapport molaire de l'amine à l'anhydride sulfureux est compris entre 0,5 : 1 et 1,3 : 1.

2. Réactif de titrage selon la revendication 1, caractérisé en ce que l'amine renfermant 1, 2 ou 3 groupes hydroxyles.

3. Réactif de titrage selon la revendication 1, caractérisé en ce que l'anhydride sulfureux est présent en mélange avec un acide, auquel cas le rapport molaire de l'anhydride sulfureux à l'acide est compris entre 20 : 1 et 1 : 5.

4. Réactif de titrage selon la revendication 3, caractérisé en ce que l'acide est un acide carboxylique.

5. Procédé pour la détermination quantitative de faibles quantités d'eau selon la méthode Karl Fischer à l'aide d'un réactif contenant une amine aliphatique avec éventuellement 1, 2 ou 3 atomes d'oxygène, de l'anhydride sulfureux et de l'iode ainsi qu'un alcool de bas poids moléculaire anhydre comme solvant, procédé caractérisé en ce qu'on emploie un réactif de titrage selon l'une quelconque des revendications précédentes.